(19) Europäisches Patentamt
European Patent Office
Office européen des brevets

(11) **EP 3 166 235 B1**

(12) **EUROPÄISCHE PATENTSCHRIFT**

(45) Veröffentlichungstag und Bekanntmachung des Hinweises auf die Patenterteilung:
**08.08.2018 Patentblatt 2018/32**

(51) Int Cl.:
***H04B 10/114*** *(2013.01)*

(21) Anmeldenummer: **16194982.1**

(22) Anmeldetag: **21.10.2016**

(54) **FÖRDEREINRICHTUNG**

TRANSPORT DEVICE

CONVOYEUR-TRANSPORTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.11.2015 DE 102015221838**

(43) Veröffentlichungstag der Anmeldung:
**10.05.2017 Patentblatt 2017/19**

(73) Patentinhaber: **Pepperl + Fuchs GmbH**
**68307 Mannheim (DE)**

(72) Erfinder:
• **BRANDT, Sönke**
**10825 Berlin (DE)**
• **WETTENGEL, Ilja**
**12559 Berlin (DE)**
• **VOIGT, Michael**
**10585 Berlin (DE)**
• **STEINHÄUSER, Frank**
**12489 Berlin (DE)**

(74) Vertreter: **Fischer, Uwe**
**Patentanwalt**
**Moritzstraße 22**
**13597 Berlin (DE)**

(56) Entgegenhaltungen:
**EP-A2- 1 631 790        DE-A1-102013 001 358**
**US-A1- 2005 129 410       US-A1- 2015 016 824**

• **G 984 Telecom Standardization: "ITU-T Gigabit-capable Passive Optical Networks (G-PON): Transmission convergence layer specification", , 20. Juli 2004 (2004-07-20), XP055352329, Gefunden im Internet: URL:https://www.itu.int/rec/dologin_pub.as p?lang=e&id=T-REC-G.984.3-200402-S!!PDF-E& type=items [gefunden am 2017-03-07]**

EP 3 166 235 B1

**Beschreibung**

Die Erfindung bezieht sich auf Fördereinrichtungen und Verfahren zu deren Betrieb.

Die deutsche Patentschrift DE 44 35 056 B4 beschreibt - im Zusammenhang mit einem Verfahren und einer Vorrichtung zum Lagern von Waren - eine Fördereinrichtung, die verfahrbare Transporteinrichtungen in Form von sogenannten Förderern aufweist.

Eine Fördereinrichtung mit den Merkmalen gemäß dem Oberbegriff des Patentanspruchs 1 ist in der deutschen Offenlegungsschrift DE 10 2013 001 358 A1 beschrieben.

Eine Standardisierung von optischen Netzwerken, die im GHz-Bereich arbeiten, ist in der Druckschrift "G 984.3 Telecom Standardization: "ITU-T Gigabit-capable Passive Optical Networks (G-PON): Transmission convergence layer specification"" vom 20.07.2004 offenbart.

Der Erfindung liegt die Aufgabe zugrunde, eine Fördereinrichtung anzugeben, die einen besonders sicheren Betrieb ermöglicht.

Diese Aufgabe wird erfindungsgemäß durch eine Fördereinrichtung mit den Merkmalen gemäß Patentanspruch 1 gelöst. Vorteilhafte Ausgestaltungen der erfindungsgemäßen Fördereinrichtung sind in Unteransprüchen angegeben.

Ein wesentlicher Vorteil der erfindungsgemäßen Fördereinrichtung ist darin zu sehen, dass bei dieser eine besonders sichere und fehlerfreie Übertragung von Daten bzw. Informationen möglich ist, weil nur Datenpakete mit korrekter Gerätekennung verwertet werden und andere verworfen werden können. Dies ist von besonderer Bedeutung, wenn beispielsweise im Rahmen der Datenpakete Abstandsinformationen übertragen oder aus oder mit den Datenpaketen Abstandsinformationen, beispielsweise durch Taktflankenauswertung, gewonnen werden und anhand dieser Abstandsinformationen ein Bereich zwischen der verfahrbaren Transporteinrichtung und dem anderen Abschnitt der Fördereinrichtung freigegeben werden soll, zum Beispiel für andere Fahrzeuge oder passierende Personen. Mit anderen Worten ermöglicht die erfindungsgemäße Auswertung der Gerätekennungen im Zusammenhang mit der Übertragung und/oder Gewinnung von Abstandsinformationen, Unfälle zu verhindern. Aber auch im Zusammenhang mit der Steuerung der Fördereinrichtung als solchen ist die sichere und fehlerfreie Übertragung von Datenpaketen von Vorteil.

Ein weiterer Vorteil besteht darin, dass eine Abstandsänderung zwischen den Sende- und Empfangseinheiten und damit eine Abstandsänderung zwischen der verfahrbaren Transporteinrichtung und dem anderen Abschnitt der Fördereinrichtung in einfacher und zuverlässige Weise erkannt werden kann, und zwar allein anhand der über das optische Freistrahlkommunikationssystem übertragenen Taktflanken. Es ist somit beispielsweise möglich, auf andere Weise erhaltene Abstandsmesswerte, insbesondere anhand von Informationen in Datenpaketen ermittelte absolute Abstandsmesswerte, zeitnah zu korrigieren. Dies ist von besonderer Bedeutung, wenn ein Bereich zwischen der verfahrbaren Transporteinrichtung und dem anderen Abschnitt der Fördereinrichtung freigegeben werden soll, zum Beispiel für andere Fahrzeuge oder passierende Personen.

Als vorteilhaft wird es angesehen, wenn die Steuereinheiten beider Sende- und Empfangseinheiten (oder zumindest die Steuereinheit einer der Sende- und Empfangseinheiten) derart ausgestaltet sind, dass sie den räumlichen Abstand zwischen den beiden Sende- und Empfangseinheiten unter Heranziehung einer die Abstandsermittlung ermöglichenden oder diese unterstützenden Information oder mehrerer solcher Informationen ermitteln, die von der jeweils anderen Sende- und Empfangseinheit empfangen werden, und die Steuereinheiten außerdem jeweils derart ausgestaltet sind, dass sie ein empfangenes Datenpaket, das eine die Abstandsermittlung ermöglichende oder diese unterstützende Information aufweist, auf das Vorhandensein der Gerätekennung, die die jeweils andere Sende- und Empfangseinheit identifiziert, überprüfen und die in dem jeweiligen Datenpaket enthaltene Information zur Bestimmung des räumlichen Abstands ausschließlich dann heranziehen, wenn in dem jeweiligen Datenpaket die Gerätekennung enthalten ist, und andernfalls das Empfangssignal bei der Abstandsbestimmung unberücksichtigt lassen.

Vorzugsweise weisen die Steuereinheiten beider Sende- und Empfangseinheiten (oder zumindest die Steuereinheit einer der Sende- und Empfangseinheiten) jeweils ein Abstandsbestimmungsmodul auf, das derart ausgestaltet ist, dass es den räumlichen Abstand zwischen den beiden Sende- und Empfangseinheiten unter Heranziehung einer Information oder mehrerer Informationen ermittelt, die von der jeweils anderen Sende- und Empfangseinheit empfangen werden.

Darüber hinaus weisen die Steuereinheiten beider Sende- und Empfangseinheiten (oder zumindest die Steuereinheit einer der Sende- und Empfangseinheiten) vorzugsweise jeweils ein Verifizierungsmodul auf, das derart ausgestaltet ist, dass es ein empfangenes Datenpaket, das eine die Abstandsermittlung ermöglichende oder diese unterstützende Information aufweist, auf das Vorhandensein der Gerätekennung, die die jeweils andere Sende- und Empfangseinheit identifiziert, überprüft und die in dem Datenpaket enthaltene Information zur Bestimmung des räumlichen Abstandes ausschließlich dann für eine Auswertung durch das Abstandsbestimmungsmodul freigibt, wenn in dem Empfangssignal die die jeweils andere Sende- und Empfangseinheit identifizierende Gerätekennung enthalten ist, und andernfalls die Verwertung der Information blockiert.

Ein Prüfsummenkontrollmodul des Verifizierungsmoduls ist bevorzugt derart ausgestaltet, dass es bei einem zu prüfenden Datenpaket eine vorgegebene Prüfsummenkontrolle vornimmt und eine in dem Datenpaket enthaltene Information zur Bestimmung des räumlichen Abstandes ausschließlich dann für eine Auswertung durch das Abstandsbestimmungsmodul freigibt, wenn die Prüfsummenkontrolle die Fehlerfreiheit der empfangenen Gerätekennung bestätigt oder sich in der Gerätekennung enthaltene Fehler anhand der jeweiligen Prüfsumme korrigieren lassen, und andernfalls die Verwertung der Information blockiert.

Alternativ oder zusätzlich kann das Prüfsummenkontrollmodul des Verifizierungsmoduls auch derart ausgestaltet sein, dass es bei einem zu prüfenden Datenpaket eine vorgegebene Prüfsummenkontrolle vornimmt und eine in dem Datenpaket enthaltene Information zur Bestimmung des räumlichen Abstands ausschließlich dann für eine Auswertung durch das Abstandsbestimmungsmodul freigibt, wenn die Prüfsummenkontrolle die Fehlerfreiheit der Information zur Bestimmung des räumlichen Abstands bestätigt oder sich festgestellte Fehler korrigieren lassen, und andernfalls die Verwertung der Information blockiert.

Die Steuereinheiten, insbesondere deren Prüfsummenkontrollmodule, sind vorzugsweise derart ausgestaltet, dass sie bei zu prüfenden Datenpaketen eine zyklische Redundanzprüfung vornehmen.

Auch ist es vorteilhaft, wenn die Steuereinheiten, insbesondere deren Abstandsbestimmungsmodule, derart ausgestaltet sind, dass sie ermittelte Abstandswerte, die den räumlichen Abstand zwischen den beiden Sende- und Empfangseinheiten angeben, untereinander austauschen und vergleichen und im Falle, dass die Abweichung zwischen den selbst ermittelten, eigenen Abstandswerten und den von der jeweils anderen Sende- und Empfangseinheit empfangenen Abstandswerten eine vorgegebene maximale Differenz erreicht oder überschreitet, ein Fehlersignal erzeugen. Vor, während oder nach der Übertragung der Abstandswerte wird für diese vorzugsweise jeweils eine Prüfsumme gebildet, die zusammen mit den Abstandswerten oder getrennt von diesen zu der jeweils anderen Sende- und Empfangseinheit übermittelt wird, damit letztgenannte eine Kontrolle der Abstandswerte auf Fehlerfreiheit und ggf. eine Fehlerkorrektur vornehmen kann.

Vorzugsweise sind die zwei Sende- und Empfangseinheiten derart ausgestaltet, dass sie untereinander Nutzdatenpakete, insbesondere zur Übermittlung von Prozessdaten und/oder Steuerdaten zur Steuerung und zum Betrieb der Fördereinrichtung, übertragen.

Auch ist es vorteilhaft, wenn die zwei Sende- und Empfangseinheiten eine Übermittlung von Nutzdatenpaketen untereinander in einem vorgegebenen optischen Übertragungskanal ermöglichen, wobei die Datenübertragungskapazität des Übertragungskanals größer bemessen ist als die zur Übertragung der Nutzdatenpakete erforderliche Mindestdatenübertragungskapazität und der Übertragungskanal somit einen freien Kanalbereich zur Verfügung stellt. Ein Vorteil dieser Ausgestaltung besteht darin, dass über den Übertragungskanal sowohl Nutzdaten, beispielsweise zur Übersendung von Steuerbefehlen zwecks Steuerung der Fördereinrichtung, als auch Informationen zur Abstandsbestimmung - wie bereits erläutert - übertragen werden können.

Vorzugsweise ist die Steuereinheit zumindest einer der, vorzugsweise beider der zumindest zwei, Sende- und Empfangseinheiten - nachfolgend erste Sende- und Empfangseinheit genannt - geeignet, den räumlichen Abstand zwischen den beiden Sende- und Empfangseinheiten unter Heranziehung einer Information oder mehrerer Informationen zu ermitteln, die über die optische Freistrahlverbindung, insbesondere den freien Kanalbereich, von der jeweils anderen Sende- und Empfangseinheit - nachfolgend zweite Sende- und Empfangseinheit genannt - empfangen werden.

Bezüglich der zweiten Sende- und Empfangseinheit wird es als vorteilhaft angesehen, wenn deren Steuereinheit derart ausgestaltet ist, dass sie mittels ihres Senders die Information, die Informationen, Teile der Information oder Teile der Informationen in ungenutzten Paketabschnitten der Nutzdatenpakete überträgt.

Alternativ kann die Steuereinheit der zweiten Sende- und Empfangseinheit derart ausgestaltet sein, dass sie mittels ihres Senders die Information, die Informationen, Teile der Information oder Teile der Informationen in separaten Informationspaketen überträgt, die zwischen Nutzdatenpaketen, insbesondere unmittelbar vor oder hinter Nutzdatenpaketen, gesendet werden.

Bezüglich der Ausgestaltung der Steuereinheit der zweiten Sende- und Empfangseinheit wird es als vorteilhaft angesehen, wenn diese ein Kommunikationsmodul zur Übermittlung der Nutzdatenpakete und ein Abstandsbestimmungsmodul aufweist.

Das Abstandsbestimmungsmodul ist bevorzugt derart ausgestaltet, dass es die Zeitspanne erfasst oder ermittelt, die zwischen dem Empfang eines von der ersten Sende- und Empfangseinheit gesendeten Datenpakets und dem darauf folgenden Wegsenden eines Datenpakets zur ersten Sende- und Empfangseinheit vergangen ist oder vergehen wird, und die erfasste Zeitspanne als die Information oder eine der Informationen zu dem Kommunikationsmodul seiner (also der zweiten) Sende- und Empfangseinheit zur Weiterleitung an die erste Sende- und Empfangseinheit übermittelt.

Das Kommunikationsmodul ist bevorzugt derart ausgestaltet, dass es die erfasste Zeitspanne als die Information oder eine der Informationen in ungenutzten Paketabschnitten der Nutzdatenpakete und/oder in separaten Informationspaketen zur ersten Sende- und Empfangseinheit übermittelt.

Die Steuereinheit der ersten Sende- und Empfangseinheit weist bevorzugt ein Abstandsbestimmungsmodul auf, das derart ausgestaltet ist, dass es die Gesamtzeitspanne erfasst, die zwischen dem Wegsenden des eigenen Datenpakets zur zweiten Sende- und Empfangseinheit und dem Empfang des von der zweiten Sende- und Empfangseinheit empfangenen Datenpakets vergeht, und den Abstand anhand der selbst erfassten Gesamtzeitspanne und der von der zweiten Sende- und Empfangseinheit erfassten und als Information empfangenen Zeitspanne ermittelt.

Besonders bevorzugt ist das Abstandsbestimmungsmodul der Steuereinheit der ersten Sende- und Empfangseinheit derart ausgestaltet, dass sie den Abstand ermittelt gemäß:

$$S = v \cdot \frac{dT - dt}{2}$$

wobei dT die selbst erfasste Gesamtzeitspanne bezeichnet, wobei dt die von der zweiten Sende- und Empfangseinheit als Information empfangene Zeitspanne bezeichnet, wobei v die Ausbreitungsgeschwindigkeit der optischen Strahlung bezeichnet und wobei S den Abstand bezeichnet.

Die mindestens zwei Sende- und Empfangseinheiten, insbesondere deren Abstandsbestimmungsmodule, sind vorzugsweise jeweils derart ausgestaltet, dass sie sowohl als die eine als auch als die andere Sende- und Empfangseinheit bzw. sowohl als die erste als auch als die zweite Sende- und Empfangseinheit arbeiten können und beide Sende- und Empfangseinheiten jeweils für sich anhand einer empfangenen Information oder mehrerer empfangener Informationen der jeweils anderen Sende- und Empfangseinheit den räumlichen Abstand zwischen den beiden Sende- und Empfangseinheiten ermitteln können.

Zur Bestimmung der Abstandsänderung weist die Sende- und Empfangseinheit, insbesondere deren Steuereinheit, vorzugsweise ein Abstandsänderungserkennungsmodul auf.

Als vorteilhaft wird es angesehen, wenn die Sende- und Empfangseinheit, insbesondere deren Abstandsänderungserkennungsmodul, die zeitliche Differenz zwischen dem geschätzten Flankenwechselzeitpunkt und dem tatsächlichen Flankenwechselzeitpunkt ermittelt und den Abstandsänderungswert unter Heranziehung der zeitlichen Differenz bildet.

Besonders einfach und damit vorteilhaft lässt sich die zeitliche Differenz ermitteln, wenn die Sende- und Empfangseinheit, insbesondere deren Abstandsänderungserkennungsmodul, einen Zählerbaustein aufweist, der jeweils bei ansteigender und/oder abfallender Flanke des aktuell erzeugten Empfangstaktsignals einen Zeitstempel, insbesondere einen Zählerstand, erzeugt.

Die Sende- und Empfangseinheit, insbesondere deren Abstandsänderungserkennungsmodul, ermittelt bevorzugt die zeitliche Differenz zwischen dem geschätzten Flankenwechselzeitpunkt und dem tatsächlichen Flankenwechselzeitpunkt anhand der Differenz zwischen dem geschätzten Zählerstand beim geschätzten Flankenwechselzeitpunkt und dem tatsächlichen Zählerstand bei dem tatsächlichen Flankenwechselzeitpunkt.

Auch ist es vorteilhaft, wenn die Sende- und Empfangseinheit derart ausgestaltet ist, dass sie zusätzlich zu dem Abstandsänderungswert einen den Abstand zwischen den Sende- und Empfangseinheiten angebenden, absoluten Abstandsmesswert bestimmt, beispielsweise anhand von Informationen in Datenpaketen, wie dies oben erläutert wurde.

Bei der letztgenannten Variante ist es außerdem von Vorteil, wenn die Sende- und Empfangseinheit derart ausgestaltet ist, dass sie den absoluten Abstandsmesswert und den auf diesen zeitlich bezogenen Abstandsänderungswert (vorzeichenrichtig) addiert und den Summenwert als korrigierten neuen Abstandswert bzw. aktualisierten Abstandsmesswert weiterverwendet.

Für den durch Addition gebildeten korrigierten bzw. aktualisierten Abstandsmesswert wird vorzugsweise eine Prüfsumme gebildet und es werden jeweils der aktualisierte Abstandsmesswert und die Prüfsumme an die andere Sende- und Empfangseinheiten übermittelt; letztere hat somit die Möglichkeit, eine Prüfung des jeweils empfangenen aktualisierten Abstandsmesswerts auf Fehlerfreiheit und korrekte Herkunft durchzuführen und anschließend einen Vergleich der geprüften Abstandsmesswerte mit selbst ermittelten eigenen Abstandsmesswerten vorzunehmen.

Der absolute Abstandsmesswert wird vorzugsweise von dem oben bereits erwähnten Abstandsbestimmungsmodul ermittelt gemäß:

$$S = v \cdot \frac{dT - dt}{2}$$

wobei dT die selbst erfasste Gesamtzeitspanne bezeichnet, wobei dt die von der anderen (zweiten) Sende- und Empfangseinheit als Information empfangene Zeitspanne bezeichnet, wobei v die Ausbreitungsgeschwindigkeit der optischen Strahlung bezeichnet und wobei S den Abstand bzw. den oben genannten absoluten Abstandsmesswert bezeichnet.

Die Steuereinheit weist bevorzugt eine Rechnereinrichtung und einen Speicher auf, in dem Softwaremodule gespeichert sind, von denen eines bei Ausführung durch die Rechnereinrichtung das Abstandsbestimmungsmodul, eines bei Ausführung durch die Rechnereinrichtung das Abstandsänderungserkennungsmodul, eines bei Ausführung durch die Steuereinheit das Kommunikationsmodul, eines bei Ausführung durch die Steuereinheit das Verifizierungsmodul und/oder eines bei Ausführung durch die Steuereinheit das Prüfsummenkontrollmodul bildet.

Darüber hinaus wird es als vorteilhaft angesehen, wenn die Sende- und Empfangseinheiten jeweils einen Datenpuffer umfassen und die Steuereinheiten jeweils derart ausgestaltet sind, dass sie für jedes Datenpaket oder zumindest für eine vorgegebene Art an Datenpaketen vor dem Versenden jeweils eine Pufferzeitspanne ermitteln, für die das jeweilige Datenpaket vor dem Versenden zu der jeweils anderen Sende- und Empfangseinheit zwischengespeichert werden soll, das Datenpaket für die jeweilige Pufferzeitspanne in dem Datenpuffer speichern und erst anschließend zu der jeweils anderen Sende- und Empfangseinheit übermitteln. Die Pufferzeitspannen werden bevorzugt jeweils derart ermittelt, dass diese einer vorgegebenen maximalen Pufferzeitspanne abzüglich der von der Steuereinheit prognostizierten Laufzeit des jeweiligen Datenpakets zu der jeweils anderen Sende- und Empfangseinheit entsprechen. Durch die Pufferung lässt sich erreichen, dass alle Datenpakete unabhängig oder zumindest weitgehend unabhängig von dem jeweiligen räumlichen Abstand zwischen den Sende- und Empfangseinheiten stets in demselben zeitlichen Abstand eintreffen und der "Pakettakt" bzw. die Paketrate abstandsunabhängig oder zumindest weitgehend abstandsunabhängig ist. Da der "Pakettakt" bzw. die Paketrate feststeht oder quasi feststeht, lässt sich die Verarbeitung der Datenpakete vereinfachen, weil das Eintreffen des jeweils nächsten Datenpakets erwartet werden kann. Auch lassen sich beispielsweise fremde oder verfälschte Datenpakete, die einen anderen Takt aufweisen bzw. zur Unzeit eintreffen, erkennen und verwerfen.

Mit Blick auf die Pufferung wird es als vorteilhaft angesehen, wenn die Steuereinheiten beider Sende- und Empfangseinheiten jeweils derart ausgestaltet sind, dass sie die räumliche Entfernung zwischen den beiden Sende- und Empfangseinheiten unter Bildung eines Abstandswerts ermitteln und unter Berücksichtigung dieses Abstandswerts die Laufzeit des jeweiligen Datenpakets prognostizieren.

Die Steuereinheiten beider Sende- und Empfangseinheiten weisen vorzugsweise jeweils ein Verzögerungsmodul auf, das für die zu sendenden Datenpakete oder zumindest für eine vorgegebene Art an Datenpaketen, insbesondere Nutzdatenpakete oder separate Informationspakete, jeweils eine Pufferzeitspanne ermittelt, für die das jeweilige Datenpaket vor dem Versenden zu der jeweils anderen Sende- und Empfangseinheit zwischengespeichert werden soll.

Bevorzugt ermittelt das Verzögerungsmodul die Pufferzeitspannen für jedes Datenpaket jeweils gemäß

$$PZS = PZSmax - tL,$$

wobei PZS die zu ermittelnde Pufferzeitspanne, PZSmax die vorgegebene maximale Pufferzeitspanne und tL die prognostizierte Laufzeit des jeweiligen Datenpakets zu der jeweils anderen Sende- und Empfangseinheit bezeichnet.

Auch ist es vorteilhaft, wenn das Verzögerungsmodul die prognostizierte Laufzeit anhand eines mit einem Abstandsbestimmungsmodul und ggf. einem Abstandsänderungserkennungsmodul ermittelten Abstands zwischen den beiden Sende- und Empfangseinheiten bestimmt gemäß:

$$tL = S / v$$

wobei v die Ausbreitungsgeschwindigkeit der optischen Strahlung, tL die prognostizierte Laufzeit tL und S den Abstand bezeichnet.

Ist ein Abstandsänderungserkennungsmodul vorhanden, so ist es vorteilhaft, wenn dessen Abstandsänderungswert und ein absoluter Abstandsmesswert des Abstandsbestimmungsmoduls (vorzeichenrichtig) addiert werden und der Summenwert als korrigierter bzw. aktualisierter Abstandsmesswert zur Bestimmung der prognostizierten Laufzeit tL herangezogen wird.

Vorzugsweise ist das Verzögerungsmodul derart ausgestaltet, dass es die vorgegebene maximale Pufferzeitspanne ermittelt in Abhängigkeit von einer vorgegebenen maximal zulässigen Entfernung Smax zwischen den Sende- und Empfangseinheiten gemäß:

$$PZSmax = Smax/v$$

wobei Smax die maximal zulässige Entfernung, PZSmax die vorgegebene maximale Pufferzeitspanne und v die Ausbreitungsgeschwindigkeit der optischen Strahlung bezeichnet.

Die Steuereinheiten beider Sende- und Empfangseinheiten weisen bevorzugt jeweils ein einen Datenpuffer bildenden Verzögerungsspeicher auf, dessen Speichergröße mindestens so groß wie das Produkt aus der Datenrate auf der optischen Freistrahlkommunikationsverbindung und der maximalen Pufferzeitspanne ist. Bevorzugt gilt also:

$$SG \geq PSMmax * fd$$

wobei SG die Speichergröße des Verzögerungsspeichers, PZSmax die maximale Pufferzeitspanne und fd die Datenrate auf der optischen Freistrahlkommunikationsverbindung bezeichnet.

Die Fördereinrichtung bildet bevorzugt eine Hebeeinrichtung, einen Aufzug oder einen Kran.

Die verfahrbare Transporteinrichtung wird bevorzugt durch einen Verfahrwagen eines Lagers, insbesondere Regallagers, ein Hubelement einer Hebeeinrichtung oder eine Kabine oder ein verfahrbares Hebeelement eines Aufzugs gebildet.

Bei der verfahrbare Transporteinrichtung handelt es sich bevorzugt um eine linear verfahrbare Transporteinrichtung.

Die Erfindung bezieht sich außerdem auf ein Verfahren zum Betreiben einer Fördereinrichtung.

Bezüglich eines solchen Verfahrens sind erfindungsgemäß die Merkmale des Patenanspruchs 14 vorgesehen.

Bezüglich der Vorteile des Verfahrens sei auf die obigen Erläuterungen im Zusammenhang mit der erfindungsgemäßen Fördereinrichtung verwiesen, da die Vorteile der erfindungsgemäßen Fördereinrichtung denen des erfindungsgemäßen Verfahrens entsprechen.

Die Erfindung wird nachfolgend anhand von Ausführungsbeispielen näher erläutert, dabei zeigen beispielhaft:

Figur 1     in einer vereinfachten schematischen Darstellung ein Ausführungsbeispiel für eine erfindungsgemäße Fördereinrichtung,

Figur 2     ein Ausführungsbeispiel für eine Steuereinrichtung für Sende- und Empfangseinheiten der Fördereinrichtung gemäß Figur 1,

Figuren 3-5     beispielhaft die Übermittlung von Datenpaketen zwischen den Sende- und Empfangseinheiten der Fördereinrichtung gemäß Figur 1 im zeitlichen Verlauf,

Figur 6     ein Ausführungsbeispiel für eine Abstandsbestimmung anhand von Informationen, die zwischen den Sende- und Empfangseinheiten der Fördereinrichtung gemäß Figur 1 übertragen werden, und

Figuren 7-8     beispielhaft die Bestimmung einer Abstandsänderung durch Schätzung von Flankenwechselzeitpunkten und Vergleich der geschätzten Flankenwechselzeitpunkte mit den tatsächlichen Flankenwechselzeitpunkten.

In den Figuren werden für identische oder vergleichbare Komponenten dieselben Bezugszeichen verwendet.

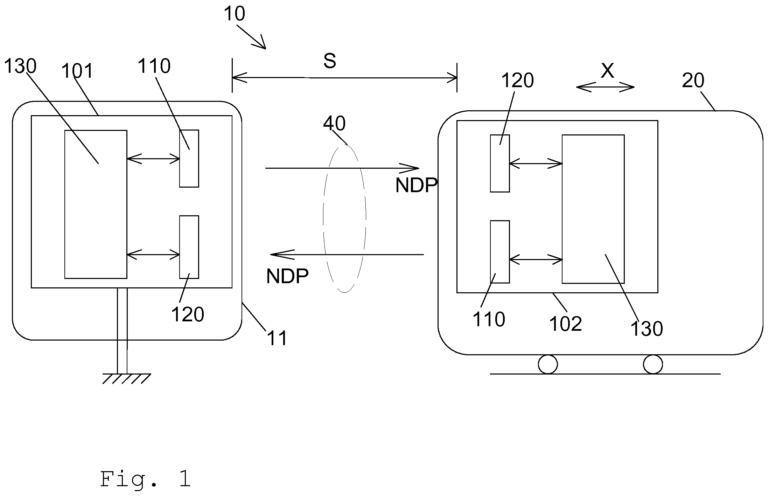

Die Figur 1 zeigt in einer vereinfachten schematischen Darstellung ein Ausführungsbeispiel für eine erfindungsgemäße Fördereinrichtung 10, bei der es sich beispielsweise um eine Hebeeinrichtung, einen Aufzug, einen Kran oder dergleichen handeln kann. Bei dem Ausführungsbeispiel gemäß Figur 1 bildet die Fördereinrichtung 10 einen Bestandteil eines automatisiert betriebenen Regallagers und umfasst unter anderem eine verfahrbare Transporteinrichtung 20, beispielsweise in Form eines linear entlang der Pfeilrichtung X verfahrbaren Verfahrwagens.

Die Fördereinrichtung 10 weist ein optisches Freistrahlkommunikationssystem 30 auf, das eine optische Freistrahlkommunikationsverbindung 40 zwischen der verfahrbaren Transporteinrichtung 20 und an einem anderen Abschnitt 11, beispielsweise orstfesten Abschnitt oder einem anderen Verfahrwagen, der Fördereinrichtung 10 ermöglicht.

Das Freistrahlkommunikationssystem 30 umfasst eine an der verfahrbaren Transporteinrichtung 20 angebrachte erste Sende- und Empfangseinheit 101 und eine an dem anderen Abschnitt 11 der Fördereinrichtung 10 angebrachte zweite Sende- und Empfangseinheit 102. Die beiden Sende- und Empfangseinheiten 101 und 102 sind vorzugsweise baugleich und können demgemäß in identischer Weise betrieben werden. Die im Folgenden beispielhaft für die erste Sende- und Empfangseinheit 101 erläuterte Betriebsweise kann demgemäß in entsprechender Weise von der zweiten Sende- und Empfangseinheiten 102 ausgeführt werden, und umgekehrt.

Die beiden Sende- und Empfangseinheiten 101 und 102 umfassen jeweils einen Sender 110, einen Empfänger 120 und eine Steuereinheit 130 und stehen in der optischen Freistrahlkommunikationsverbindung 40 zum Zwecke einer Übertragung von Nutzdatenpaketen NDP.

Die Nutzdatenpakete NDP werden vorzugsweise in einem vorgegebenen optischen Übertragungskanal übermittelt. Als vorteilhaft wird es angesehen, wenn die Datenübertragungskapazität des Übertragungskanals größer bemessen ist als die zur Übertragung der Nutzdatenpakete NDP erforderliche Mindestdaten-Übertragungskapazität, so dass der Übertragungskanal einen freien Kanalbereich zur Verfügung stellt. Im Falle einer solchen Auslegung der optische Freistrahlkommunikationsverbindung 40 ist es beispielsweise möglich, zusätzlich Informationen zu übertragen, die eine Bestimmung des Abstandes S bzw. der räumlichen Entfernung zwischen den beiden Sende- und Empfangseinheiten 101 und 102 ermöglichen.

Der Abstand S kann zur Steuerung der Fördereinrichtung 10 herangezogen werden, beispielsweise um einen Bereich zwischen der verfahrbare Transporteinrichtung 20 und dem anderen Abschnitt 11 der Fördereinrichtung 10 freizugeben, beispielsweise für andere Fahrzeuge oder passierender Personen. Es ist aus diesem Grunde wichtig, dass der Abstand S möglichst genau ermittelt und möglichst fehlerarm übertragen wird; denn eine fehlerhafte Abstandsangabe könnte einen Unfall hervorrufen.

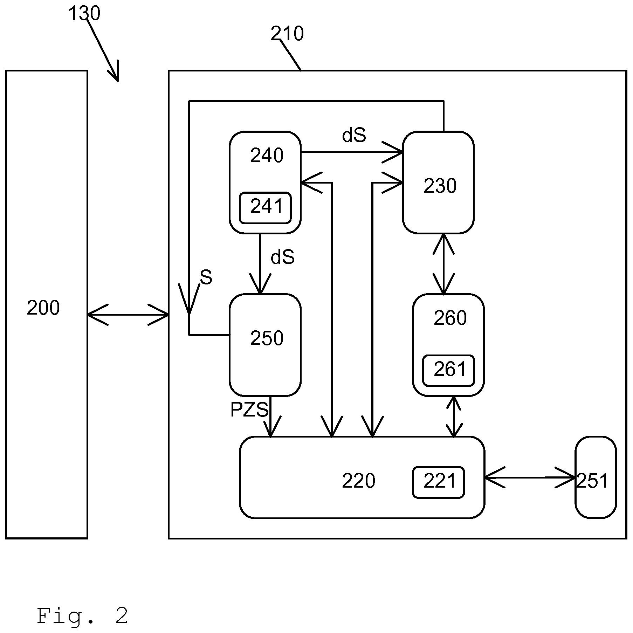

Die Figur 2 zeigt ein Ausführungsbeispiel für eine Steuereinheit 130, die in den beiden Sende- und Empfangseinheiten 101 und 102 gemäß Figur 1 eingesetzt werden kann.

Die Steuereinheit 130 umfasst eine Recheneinrichtung 200, bei der sich vorzugsweise um eine Mikroprozessoreinrichtung handelt, und einen Speicher 210. In dem Speicher 210 ist eine Vielzahl an Programmmodulen gespeichert, die von der Recheneinrichtung 200 ausgeführt werden können und bei Ausführung durch die Recheneinrichtung 200 vorzugsweise ein Kommunikationsmodul 220, ein Abstandsbestimmungsmodul 230, ein Abstandsänderungserkennungsmodul 240, ein Verzögerungsmodul 250 und ein Verifizierungsmodul 260 bilden.

Das Kommunikationsmodul 220 steht mit dem Sender 110 und dem Empfänger 120 in Verbindung und wickelt die optische Freistrahlkommunikationsverbindung 40 zwischen den beiden Sende- und Empfangseinheiten 101 und 102 ab.

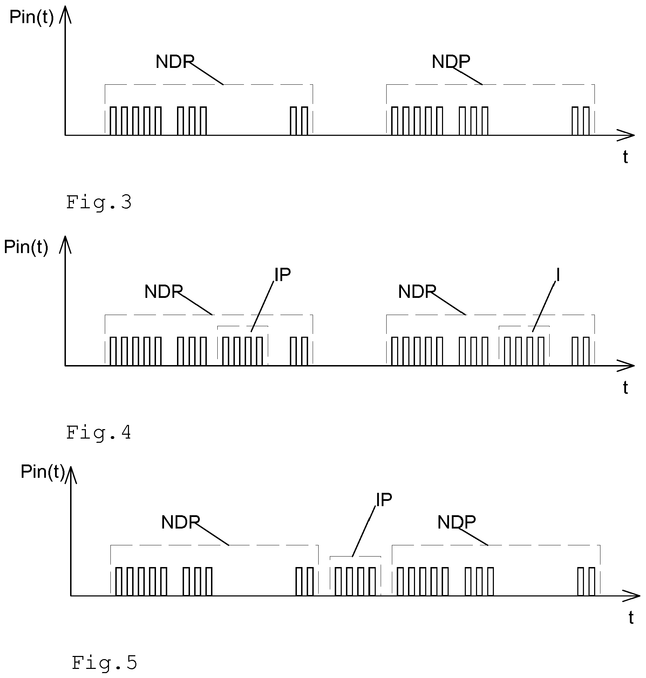

Die Figur 3 zeigt beispielhaft einen Strom an Nutzdatenpaketen NDP über der Zeit t, die von dem Kommunikationsmodul 220 zum Zwecke des Sendens erzeugt oder von dem Kommunikationsmodul 220 der jeweils anderen Sende- und Empfangseinheit empfangen werden können. In den Nutzdatenpaketen NDP können Prozessdaten und Steuerdaten zur Steuerung und zum Betrieb der Fördereinrichtung 10 übertragen werden.

Mit dem Kommunikationsmodul 220 steht das Abstandsbestimmungsmodul 230 in Verbindung. Die Aufgabe des Abstandsbestimmungsmoduls 230 besteht darin, Informationen I auszuwerten, die über die Freistrahlkommunikationsverbindung 40 zwischen den beiden Sende- und Empfangseinheiten übertragen werden und eine Abstandsbestimmung ermöglichen.

Die Informationen I können in ungenutzten Paketabschnitten der Nutzdatenpakete NDP übertragen werden, wie in der Figur 4 beispielhaft gezeigt ist, oder in separaten Informationspaketen IP, wie in der Figur 5 beispielhaft gezeigt ist.

Bei den Informationen I, die über die Freistrahlkommunikationsverbindung 40 übertragen werden, handelt es sich vorzugsweise um Zeitstempel.

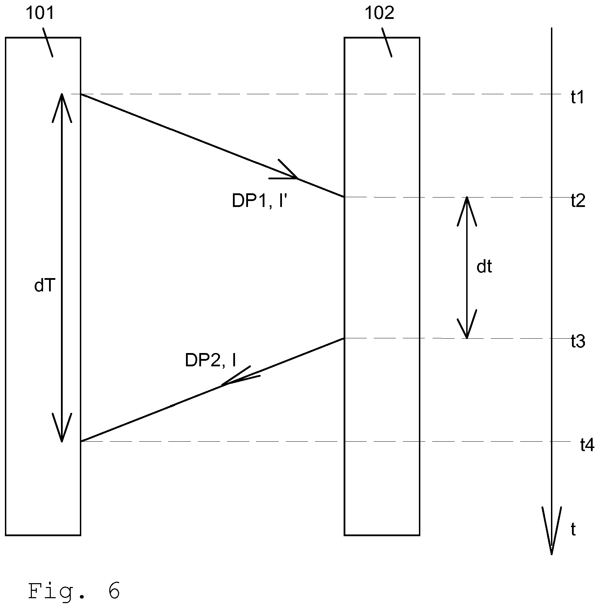

Im Zusammenhang mit Figuren 2 und 6 wird nachfolgend beispielhaft erläutert, wie anhand von empfangenen Zeitstempeln der zweiten Sende- und Empfangseinheit 102 die erste Sende- und Empfangseinheit 101 den Abstand S zur zweiten Sende- und Empfangseinheit 102 ermitteln kann:

Das Abstandsbestimmungsmodul 230 der ersten Sende- und Empfangseinheit 101 erfasst die Gesamtzeitspanne dT, die zwischen dem Wegsenden eines eigenen Datenpakets DP1 (z. B. Nutzdatenpaket oder separates Informationspaket) zur zweiten Sende- und Empfangseinheit 102 (siehe Zeitpunkt t1 in Figur 6) und dem nachfolgenden Empfang eines von der zweiten Sende- und Empfangseinheit 102 empfangenen Datenpakets DP2, nachfolgend auch Antwortdatenpaket genannt, vergeht (siehe Zeitpunkt t4 in Figur 6).

Das Abstandsbestimmungsmodul 230 der zweiten Sende- und Empfangseinheit 102 ermittelt die Zeitspanne dt, die zwischen dem Empfang des von der ersten Sende- und Empfangseinheit 101 gesendeten Datenpakets DP1 (siehe Zeitpunkt t2 in Figur 6) und dem darauf folgenden Wegsenden des Antwortdatenpakets (siehe Zeitpunkt t3 in Figur 6) zur ersten Sende- und Empfangseinheit 101 vergangen ist oder vergehen wird, und übermittelt diese erfasste Zeitspanne dt als Information I zu der ersten Sende- und Empfangseinheit 101. Die Zeitspanne dt wird durch Differenzbildung der Zeitpunkte t2 und t3 gebildet.

Anhand der Information I kann das Abstandsbestimmungsmodul 230 der ersten Sende- und Empfangseinheit 101 nun den Abstand ermitteln gemäß:

$$S = v \cdot \frac{dT - dt}{2}$$

- wobei dT die von der ersten Sende- und Empfangseinheit 101 selbst erfasste Gesamtzeitspanne bezeichnet,
- wobei dt die von der zweiten Sende- und Empfangseinheit 102 als Information I gesendete und von der ersten Sende- und Empfangseinheit 101 empfangene Zeitspanne bezeichnet,
- wobei v die Ausbreitungsgeschwindigkeit der optischen Strahlung bezeichnet und
- wobei S den Abstand bzw. einen absoluten Abstandsmesswert, der den Abstand zum Zeitpunkt t4 des Datenpaketempfangs in Figur 6 angibt, bezeichnet.

Um dem Abstandsbestimmungsmodul 230 der zweiten Sende- und Empfangseinheit 102 eine Abstandsbestimmung in identischer Weise zu ermöglichen, übermittelt das Abstandsbestimmungsmodul 230 der ersten Sende- und Empfangseinheit 101 ebenfalls jeweils die Zeitspanne (Information I'), die zwischen dem Empfang eines von der zweiten Sende- und Empfangseinheit 102 gesendeten Datenpakets (in Figur 6 nicht gezeigt) und dem darauf folgenden Wegsenden des Datenpakets DP1 zur zweiten Sende- und Empfangseinheit 102 vergangen ist oder vergehen wird. Anhand der empfangenen Information I' kann das Abstandsbestimmungsmodul 230 der zweiten Sende- und Empfangseinheit 102 den Abstand S in entsprechender oder identischer Weise errechnen, wie dies im Zusammenhang mit der ersten Sende- und Empfangseinheit 101 erläutert worden ist.

Die Abstandsbestimmungsmodule 230 der beiden Sende- und Empfangseinheiten ermöglichen somit eine regelmäßige absolute Messung des Abstandes S bzw. eine regelmäßige Bestimmung eines entsprechenden absolutes Abstandsmesswertes S zwischen den Sende- und Empfangseinheiten, und zwar entsprechend der zeitlichen Rate der übersendeten Datenpakete.

Die Abstandsbestimmungsmodule 230 der beiden Sende- und Empfangseinheiten tauschen vorzugsweise die von ihnen ermittelten Abstandswerte untereinander aus und vergleichen diese. Im Falle, dass die Abweichung zwischen den eigenen Abstandswerten und den von der jeweils anderen beiden Sende- und Empfangseinheit empfangenen Abstandswerte eine vorgegebene maximale Differenz erreicht oder überschreitet, erzeugen die Abstandsbestimmungsmodule 230 vorzugsweise ein Fehlersignal.

Um besonders schnell, und zwar insbesondere schneller als mit dem Abstandsbestimmungsmodul 230, eine Änderung des von dem Abstandsbestimmungsmodul 230 ermittelten Abstands S erkennen zu können, ist die Steuereinrichtung 130 gemäß Figur 2 mit dem Abstandsänderungserkennungsmodul 240 ausgestattet.

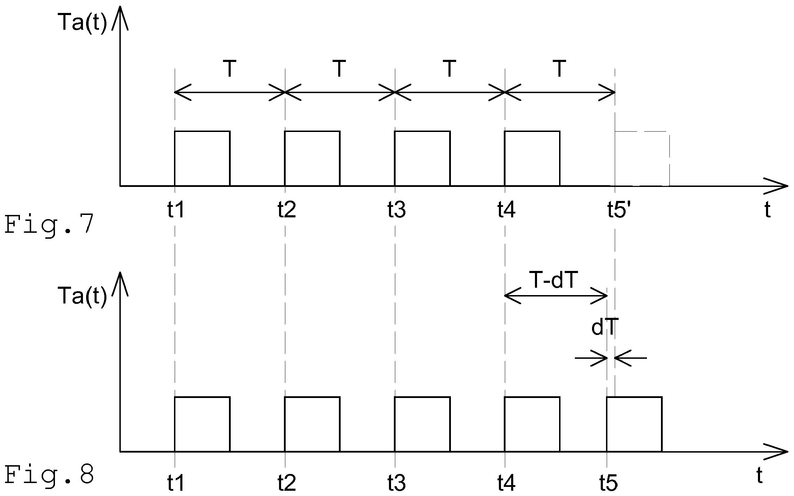

Das Abstandsänderungserkennungsmodul 240 steht mit dem Kommunikationsmodul 220 in Verbindung und erzeugt mit dem über die optische Freistrahlverbindung 40 empfangenen optischen Empfangssignal Pin(t), also mit dem Strom der eintreffenden Datenpakete (siehe Figuren 3 bis 5) ein Empfangstaktsignal Ta(t), das beispielhaft in der Figur 7 über der Zeit t gezeigt ist.

Anhand des Empfangstaktsignal Ta(t) kann das Abstandsänderungserkennungsmodul 240 die Zeitpunkte von ansteigenden und/oder abfallenden Flankenwechseln des Empfangstaktsignals über eine Vielzahl an Taktperioden erfassen. Bei dem Ausführungsbeispiel gemäß Figur 7 wird beispielhaft davon ausgegangen, dass das Abstandsänderungserkennungsmodul 240 jeweils die Zeitpunkte der ansteigenden Flankenwechsel auswertet; diese Zeitpunkte sind in der Figur 7 mit den Bezugszeichen t1 bis t4 gekennzeichnet.

Unter Heranziehung der Zeitpunkte t1 bis t4 in der Vergangenheit kann das Abstandsänderungserkennungsmodul 240 durch Mitteln die mittlere Periodenlänge T errechnen und mit der mittlere Periodenlänge T und dem Zeitpunkt des letzten Flankenwechsels den Zeitpunkt des jeweils nächsten Flankenwechsels unter Bildung eines geschätzten nachfolgenden Flankenwechselzeitpunkts t5' schätzen (siehe Figur 7) gemäß:

$$t5' = t4 + T$$

Anhand des geschätzten Flankenwechselzeitpunkts t5' und des tatsächlichen gemessenen Flankenwechselzeitpunkts t5 (siehe Figur 8) bzw. anhand der zeitlichen Differenz dT zwischen diesen Flankenwechselzeitpunkten kann die Änderung des Abstands S zwischen den Sende- und Empfangseinheiten 101 und 102 und ein entsprechender Abstandsänderungswert dS ermittelt werden gemäß:

$$dS = v \; dT = v \; (t5'-t5)$$

wobei v die Ausbreitungsgeschwindigkeit der optischen Strahlung bezeichnet.

Zur Bestimmung der zeitlichen Differenz dT kann das Abstandsänderungserkennungsmodul 240 einen Zählerbaustein 241 aufweisen, der jeweils bei ansteigender Flanke des aktuell erzeugten Empfangstaktsignals Ta(t) einen Zeitstempel in Form des jeweiligen Zählerstands erzeugt.

Die zeitliche Differenz dT zwischen dem geschätzten Flankenwechselzeitpunkt t5' und dem tatsächlichen Flankenwechselzeitpunkt t5 kann bei einer solchen Ausgestaltung anhand der Differenz zwischen dem geschätzten Zählerstand Zg beim geschätzten Flankenwechselzeitpunkt t5' und dem tatsächlichen Zählerstand Zt bei dem tatsächlichen Flankenwechselzeitpunkt t5 ermittelt werden gemäß:

$$dT = (Zg-Zt) \; / \; fT$$

wobei fT die Zählerrate bzw. die Zählertaktfrequenz bezeichnet.

Bei dem Ausführungsbeispiel gemäß den Figuren 7 und 8 wird das Abstandsänderungserkennungsmodul 240 also feststellen, dass sich der Abstand S zwischen den beiden Sende- und Empfangseinheiten 101 und 102 um den Abstandsänderungswert dS reduziert hat, da die Anstiegsflanke früher als prognostiziert eingetroffen ist.

Das Abstandsänderungserkennungsmodul 240 wird den Abstandsänderungswert dS vorzugsweise an das Abstandsbestimmungsmodul 230 übermitteln, das den zuvor ermittelten Abstandswert Sa entsprechend korrigieren wird und einen neuen Abstandswert S durch vorzeichenrichtige Addition mit dem Abstandsänderungswert dS (hier dS < 0) erzeugt gemäß:

$$S = Sa + dS$$

Die Abstandsbestimmungsmodule 230 der beiden Sende- und Empfangseinheiten können die korrigierten neuen Abstandswerte austauschen und vergleichen. Im Falle, dass die Abweichung zwischen den eigenen korrigierten Abstandswerten und den von der jeweils anderen Sende- und Empfangseinheit empfangenen korrigierten Abstandswerten eine vorgegebene maximale Differenz erreicht oder überschreitet, erzeugen die Abstandsbestimmungsmodule 230 vorzugsweise ein Fehlersignal.

Um erkennen zu können, ob die korrigierten neuen Abstandswerte tatsächlich von der jeweils anderen zugeordneten Sende- und Empfangseinheit stammen und/oder fehlerfrei übertragen worden sind, wird vorzugsweise mit bzw. von den korrigierten neuen Abstandswerten jeweils eine Prüfsumme gebildet und die Prüfsummen werden zusammen mit den korrigierten neuen Abstandsmesswerten an die jeweils andere Sende- und Empfangseinheiten übermittelt, damit letztere eine Prüfung der empfangenen Abstandsmesswerte auf Fehlerfreiheit bzw. korrekte Herkunft vornehmen kann. Zur sendeseitigen Bildung der Prüfsummen weisen die Kommunikationsmodule 220 vorzugsweise jeweils ein Prüfsummenbildungsmodul 221 auf.

Das oben im Zusammenhang mit der Figur 2 erwähnte Verzögerungsmodul 250 der Steuereinrichtung 130 steht vorzugsweise mit dem Kommunikationsmodul 220 und dem Abstandsbestimmungsmodul 230 in Verbindung.

Die Funktion des Verzögerungsmoduls 250 der Steuereinrichtung 130 besteht darin, für die zu sendenden Datenpakete, oder zumindest für eine vorgegebene Art an Datenpaketen wie beispielsweise die Nutzdatenpakete NDP oder die separaten Informationspakete IP gemäß den Figuren 2 bis 5, jeweils eine Pufferzeitspanne PTS ermitteln, für die das jeweilige Datenpaket vor dem Versenden zu der jeweils anderen Sende- und Empfangseinheit zwischengespeichert werden soll. Zum Zwischenspeichern der Datenpakete dient ein einen Datenpuffer bildender Verzögerungsspeicher 251 in Figur 2.

Die Pufferzeitspannen PZS werden für jedes Datenpaket jeweils derart ermittelt, dass diese einer vorgegebenen maximalen Pufferzeitspanne abzüglich der von dem Verzögerungsmodul 250 prognostizierten Laufzeit des jeweiligen Datenpakets zu der jeweils anderen Sende- und Empfangseinheit entsprechen. Mit anderen Worten soll also bevorzugt gelten:

$$PZS = PZSmax - tL,$$

wobei PZS die Pufferzeitspanne, PZSmax die vorgegebene maximale Pufferzeitspanne und tL die prognostizierte Laufzeit des jeweiligen Datenpakets zu der jeweils anderen Sende- und Empfangseinheit bezeichnet.

Zur Bestimmung der prognostizierten Laufzeit tL wertet das Verzögerungsmodul 250 vorzugsweise den von dem Abstandsbestimmungsmodul 230 ermittelten Abstand S zwischen den beiden Sende- und Empfangseinheiten 101 und 102 sowie den von dem Abstandsänderungserkennungsmodul 240 ermittelten Abstandsänderungswert dS aus und bestimmt die prognostizierte Laufzeit tL gemäß:

$$tL = Sk / v$$

wobei v die Ausbreitungsgeschwindigkeit der optischen Strahlung und Sk den um den Abstandsänderungswert dS des Abstandsänderungserkennungsmoduls 240 korrigierten Abstandswert S des Abstandsbestimmungsmoduls 230 (Sk = S + ds) bezeichnet.

Die vorgegebene maximale Pufferzeitspanne PZSmax wird vorzugsweise ermittelt in Abhängigkeit von der maximal möglichen bzw. zulässigen Entfernung Smax zwischen den Sende- und Empfangseinheiten 101 und 102. Vorzugsweise wird die maximale Pufferzeitspanne PZSmax ermittelt gemäß:

$$PZSmax = Smax/v$$

Die Speichergröße SG des Verzögerungsspeichers 251 ist bevorzugt derart gewählt, dass dieser für die maximale Pufferzeitspanne PZSmax Daten speichern kann. Im Falle einer Datenrate fd auf der optischen Freistrahlkommunikationsverbindung 40 ergibt sich die minimale Speichergröße SGmin wie folgt:

$$SG \geq SGmin = PSMmax * fd$$

Durch die Pufferung mittels des Verzögerungsmoduls 250 im Verzögerungsspeicher 251 wird erreicht, dass alle Datenpakete unabhängig von dem jeweiligen räumlichen Abstand zwischen den Sende- und Empfangseinheiten 101 und 102 stets in demselben zeitlichen Abstand eintreffen, und der "Pakettakt" bzw. die Paketrate abstandsunabhängig ist.

Das oben im Zusammenhang mit der Figur 2 erwähnte Verifizierungsmodul 260 der Steuereinrichtung 130 steht vorzugsweise mit dem Kommunikationsmodul 230 in Verbindung und überwacht das eingehende Empfangssignal Pin(t) und damit die mit dem Empfangssignal Pin(t) übertragenen Datenpakete oder eine vorgegebene Auswahl an Datenpaketen auf das Vorhandensein einer Gerätekennung, die die jeweils andere Sende- und Empfangseinheit 101 bzw. 102 eindeutig identifiziert.

Das Verifizierungsmodul 260 kann alle Datenpakete hinsichtlich der Gerätekennung überprüfen, also unabhängig davon, ob diese zur Abstandsbestimmung geeignete Abstands- oder Zeitstempelinformationen enthalten oder nicht, oder alternativ zur Entlastung ausschließlich Datenpakete mit Abstands- oder Zeitstempelinformationen. Beispielsweise in dem Falle, dass separate Informationspakete IP mit Abstands- oder Zeitstempelinformationen empfangen werden (siehe Figur 5), werden vorzugsweise ausschließlich die separaten Informationspakete IP auf die gültige Gerätekennung hin untersucht.

Vorzugsweise wird das Verifizierungsmodul 260 Datenpakete oder zumindest deren Informationen zur Bestimmung der räumlichen Entfernung zwischen den beiden Sende- und Empfangseinheiten 101 und 102 blockieren oder verwerfen, wenn keine korrekte, also keine die jeweils andere Sende- und Empfangseinheit 101 bzw. 102 eindeutig identifizierende, Gerätekennung aufgefunden wird.

Falls das Verifizierungsmodul 260 ausschließlich im Zusammenhang mit der Auswertung von Abstands- oder Zeitstempelinformationen herangezogen wird, ist es vorteilhaft, wenn das Verifizierungsmodul 260 mit dem Abstandsbestimmungsmodul 230 oder bevorzugt sogar ausschließlich mit dem Abstandsbestimmungsmodul 230 in Verbindung steht und eine Herkunfts- bzw. Gerätekennungsprüfung nur im Zusammenhang mit Datenpaketen durchführt, die wegen das Vorhandenseins von Abstands- oder Zeitstempelinformationen von dem Abstandsbestimmungsmodul 230 verwertet werden sollen.

Als besonders vorteilhaft wird es angesehen, wenn das Verifizierungsmodul 260 zur Verifizierung ein Prüfsummenkontrollmodul 261 aufweist.

Das Prüfsummenkontrollmodul 261 wertet eine in dem Empfangssignal Pin(t) (vgl. Figuren 3 bis 5), insbesondere in dem jeweils empfangenen Datenpaket, enthaltene Prüfsumme aus und untersucht diese auf Fehlerfreiheit der empfangenen Daten. Um eine solche Fehlerüberprüfung und ggf. sogar eine Fehlerkorrektur zu ermöglichen, übersenden die Kommunikationsmodule 220 der beiden Sende- und Empfangseinheiten 101 bzw. 102 eine Prüfsumme bevorzugt

- jeweils für jedes Datenpaket,
- jeweils für die im jeweiligen Datenpaket enthaltene Gerätekennung und/oder
- jeweils für die im jeweiligen Datenpaket enthaltene Abstands- oder Zeitstempelinformation.

Bei der Prüfsumme handelt es sich vorzugsweise um einen CRC-Code (zyklischer Redundanzprüfungscode).

Vorzugsweise wird das Prüfsummenkontrollmodul 261 im Rahmen der Fehlerprüfung in dem Empfangssignal Pin(t) enthaltene Abstands- oder Zeitstempelinformation ausschließlich dann zur Weiterverwendung und weiteren Auswertung (also Abstandsbestimmung) durch das Abstandsbestimmungsmodul 230 freigeben, wenn die Fehlerprüfung die Fehlerfreiheit der empfangenen Gerätekennung und/oder die Fehlerfreiheit der Abstands- oder Zeitstempelinformation bestätigt oder sich vorhandene Fehler korrigieren lassen. Andernfalls wird das Prüfsummenkontrollmodul 261 die Weiterverwendung und weitere Auswertung der fehlerhaften Datenpakete durch das Abstandsbestimmungsmodul 230 blockieren.

Das Prüfsummenkontrollmodul 261 ist vorzugsweise derart ausgestaltet, dass es CRC-Codes bearbeiten und eine Fehlerprüfung und Fehlerkorrektur im Rahmen einer zyklische Redundanzprüfung vornehmen kann.

Um sendeseitig entsprechende Prüfsummen in oder mit den Datenpaketen senden zu können, die von dem empfängerseitigen Prüfsummenkontrollmodul 261 ausgewertet werden können, weisen die Kommunikationsmodule 220 jeweils ein Prüfsummenbildungsmodul 221 auf. Das Prüfsummenbildungsmodul 221 bildet und versendet Prüfsummen bevorzugt

- jeweils für jedes Datenpaket,
- jeweils für die im jeweiligen Datenpaket enthaltene Gerätekennung und/oder
- jeweils für die im jeweiligen Datenpaket enthaltene Abstands- oder Zeitstempelinformation.

Obwohl die Erfindung im Detail durch bevorzugte Ausführungsbeispiele näher illustriert und beschrieben wurde, so ist die Erfindung nicht auf die offenbarten Beispiele beschränkt. Andere Variationen können vom Fachmann aus den offenbarten Beispielen abgeleitet werden, ohne den Schutzumfang der Erfindung zu verlassen.

Bezugszeichen

| 10 | Fördereinrichtung |
| 11 | Abschnitt der Fördereinrichtung |
| 10 | erste Sende- und Empfangseinheit |
| 20 | verfahrbare Transporteinrichtung |
| 30 | Freistrahlkommunikationssystem |
| 40 | optische Freistrahlkommunikationsverbindung |
| 102 | zweite Sende- und Empfangseinheit |
| 110 | Sender |
| 120 | Empfänger |
| 130 | Steuereinheit |
| 200 | Recheneinrichtung |
| 210 | Speicher |
| 220 | Kommunikationsmodul |
| 221 | Prüfsummenbildungsmodul |
| 230 | Abstandsbestimmungsmodul |
| 240 | Abstandsänderungserkennungsmodul |
| 241 | Zählerbaustein |
| 250 | Verzögerungsmodul |
| 251 | Verzögerungsspeicher |
| 260 | Verifizierungsmodul |
| 261 | Prüfsummenkontrollmodul |

| dS | Abstandsänderungswert |
| dT, dt | Zeitspannen |
| DP1, DP2 | Datenpakete |
| I | Information |
| IP | Informationspaket |
| NDP | Nutzdatenpakete |
| Pin(t) | Empfangssignal |
| PZS | Pufferzeitspanne |
| S | Abstand/räumliche Entfernung |
| t | Zeit |
| t1-t5, t5' | Zeitpunkte |
| T | Periodenlänge |
| Ta(t) | Empfangstaktsignal |
| X | Pfeilrichtung |

**Patentansprüche**

1. Fördereinrichtung (10) mit mindestens einer verfahrbaren Transporteinrichtung (20), wobei

   - die Fördereinrichtung (10) ein optisches Freistrahlkommunikationssystem (30) aufweist mit zwei Sende- und Empfangseinheiten (101, 102), die jeweils einen Sender (110), einen Empfänger (120) und eine Steuereinheit (130) umfassen und von denen eine an der verfahrbaren Transporteinrichtung (20) und die andere an einem anderen Abschnitt (11) der Fördereinrichtung (10) befestigt ist, und
   - die zwei Sende- und Empfangseinheiten (101, 102) in einer optischen Freistrahlverbindung (40) stehen und eine Übermittlung von Datenpaketen ermöglichen,

   **dadurch gekennzeichnet, dass**

   - die Steuereinheit (130) zumindest einer der zwei Sende- und Empfangseinheiten (101, 102), vorzugsweise die Steuereinheit (130) beider Sende- und Empfangseinheiten (101, 102), derart ausgestaltet ist, dass sie ein Empfangssignal, insbesondere dessen Datenpakete oder zumindest eine vorgegebene Art von Datenpaketen, auf das Vorhandensein einer Gerätekennung, die die jeweils andere Sende- und Empfangseinheit (101, 102) identifiziert, überprüft und das Empfangssignal, insbesondere das jeweilige Datenpaket, komplett oder in Teilen verwirft, wenn in dem Empfangssignal bzw. dem jeweiligen Datenpaket keine die jeweils andere Sende- und Empfangseinheit (101, 102) identifizierende Gerätekennung enthalten ist, und

- die Steuereinheit (130) zumindest einer der zwei Sende- und Empfangseinheiten (101, 102), vorzugsweise die Steuereinheit (130) beider Sende- und Empfangseinheiten (101, 102), derart ausgestaltet ist, dass sie aus über die optisehe Freistrahlverbindung (40) empfangenen optischen Empfangssignalen ein Empfangstaktsignal erzeugt, die Zeitpunkte von ansteigenden und/oder abfallenden Flankenwechseln des Empfangstaktsignals über eine Vielzahl an Taktperioden erfasst, unter Heranziehung der Zeitpunkte in der Vergangenheit den Zeitpunkt des jeweils nächsten Flankenwechsels unter Bildung eines geschätzten Flankenwechselzeitpunkts schätzt und anhand des geschätzten Flankenwechselzeitpunkts und des tatsächlichen Flankenwechselzeitpunkts einen eine Abstandsänderung zwischen den Sende- und Empfangseinheiten (101, 102) angebenden Abstandsänderungswert bildet.

2. Fördereinrichtung (10) nach Anspruch 1,
**dadurch gekennzeichnet, dass**

- die Steuereinheit (130) zumindest einer der zwei Sende- und Empfangseinheiten (101, 102), vorzugsweise die Steuereinheit (130) beider Sende- und Empfangseinheiten (101, 102), derart ausgestaltet ist, dass sie den räumlichen Abstand zwischen den beiden Sende- und Empfangseinheiten (101, 102) unter Heranziehung einer die Abstandsermittlung ermöglichenden oder diese unterstützenden Information oder mehrerer solcher Informationen ermittelt, die von der jeweils anderen Sende- und Empfangseinheit (101, 102) empfangen werden, und
- die Steuereinheit (130) außerdem derart ausgestaltet ist, dass sie ein empfangenes Datenpaket, das eine die Abstandsermittlung ermöglichende oder diese unterstützender Information aufweist, auf das Vorhandensein der Gerätekennung, die die jeweils andere Sende- und Empfangseinheit (101, 102) identifiziert, überprüft und die in dem jeweiligen Datenpaket enthaltene Information zur Bestimmung des räumlichen Abstands ausschließlich dann heranzieht, wenn in dem jeweiligen Datenpaket die Gerätekennung enthalten ist, und andernfalls das Empfangssignal bei der Abstandsbestimmung unberücksichtigt lässt.

3. Fördereinrichtung (10) nach einem der voranstehenden Ansprüche,
**dadurch gekennzeichnet, dass**

- die Steuereinheit (130) zumindest einer der zwei Sende- und Empfangseinheiten (101, 102), vorzugsweise die Steuereinheit (130) beider Sende- und Empfangseinheiten (101, 102), ein Abstandsbestimmungsmodul (230) und ein Verifizierungsmodul (260) aufweist,
- wobei das Abstandsbestimmungsmodul (230) derart ausgestaltet ist, dass es den räumlichen Abstand zwischen den beiden Sende- und Empfangseinheiten (101, 102) unter Heranziehung einer Information oder mehrerer Informationen ermittelt, die von der jeweils anderen Sende- und Empfangseinheit (101, 102) empfangen werden, und
- wobei das Verifizierungsmodul (260) derart ausgestaltet ist, dass es ein empfangenes Datenpaket, das eine die Abstandsermittlung ermöglichende oder diese unterstützende Information aufweist, auf das Vorhandensein der Gerätekennung, die die jeweils andere Sende- und Empfangseinheit (101, 102) identifiziert, überprüft und die in dem Datenpaket enthaltene Information zur Bestimmung des räumlichen Abstandes ausschließlich dann für eine Auswertung durch das Abstandsbestimmungsmodul (230) freigibt, wenn in dem Datenpaket die die jeweils andere Sende- und Empfangseinheit (101, 102) identifizierende Gerätekennung enthalten ist, und andernfalls die Verwertung der Information blockiert.

4. Fördereinrichtung (10) nach Anspruch 3, **dadurch gekennzeichnet, dass**
die Steuereinheit (130) zumindest einer der zwei Sende- und Empfangseinheiten (101, 102), vorzugsweise die Steuereinheit (130) beider Sende- und Empfangseinheiten (101, 102), ein Verifizierungsmodul (260) mit einem Prüfsummenkontrollmodul (261) aufweist, das derart ausgestaltet ist, dass es bei einem zu prüfenden Datenpaket eine vorgegebene Prüfsummenkontrolle vornimmt und eine in dem Datenpaket enthaltene Information zur Bestimmung des räumlichen Abstandes ausschließlich dann für eine Auswertung durch das Abstandsbestimmungsmodul (230) freigibt, wenn die Prüfsummenkontrolle die Fehlerfreiheit der empfangenen Gerätekennung bestätigt oder sich in der Gerätekennung enthaltene Fehler anhand der jeweiligen Prüfsumme korrigieren lassen, und andernfalls die Verwertung der Information blockiert.

5. Fördereinrichtung (10) nach einem der Ansprüche 3 oder 4, **dadurch gekennzeichnet, dass** die Steuereinheit (130) zumindest einer der zwei Sende- und Empfangseinheiten (101, 102), vorzugsweise die Steuereinheit (130) beider Sende- und Empfangseinheiten (101, 102), ein Verifizierungsmodul (260) mit einem Prüfsummenkontrollmodul (261) aufweist, das derart ausgestaltet ist, dass es bei einem zu prüfenden Datenpaket eine vorgegebene Prüfsummenkontrolle vornimmt und eine in dem Datenpaket enthaltene Information zur Bestimmung des räumlichen Abstands ausschließlich dann für eine Auswertung durch das Abstandsbestimmungsmodul (230) freigibt, wenn die Prüfsummenkontrolle die Fehlerfreiheit der Information zur Bestimmung des räumlichen Abstands bestätigt oder sich festgestellte Fehler korrigieren lassen, und andernfalls die Verwertung der Information blockiert.

6. Fördereinrichtung (10) nach einem der Ansprüche 4 oder 5 **dadurch gekennzeichnet, dass** die Steuereinheit (130) zumindest einer der zwei Sende- und Empfangseinheiten (101, 102), vorzugsweise die Steuereinheit (130) beider Sende- und Empfangseinheiten (101, 102), insbesondere deren Prüfsummenkontrollmodul (261), derart ausgestaltet ist, dass sie bei zu prüfenden Datenpaketen eine zyklische Redundanzprüfung vornimmt.

7. Fördereinrichtung (10) nach einem der Ansprüche 3 bis 6, **dadurch gekennzeichnet, dass** die Steuereinheiten (130), insbesondere deren Abstandsbestimmungsmodule, derart ausgestaltet sind, dass sie ermittelte Abstandswerte, die den räumlichen Abstand zwischen den beiden Sende- und Empfangseinheiten (101, 102) angeben, untereinander austauschen und vergleichen und im Falle, dass die Abweichung zwischen den selbst ermittelten, eigenen Abstandswerten und den von der jeweils anderen Sende- und Empfangseinheit (101, 102) empfangenen Abstandswerten eine vorgegebene maximale Differenz erreicht oder überschreitet, ein Fehlersignal erzeugen.

8. Fördereinrichtung (10) nach einem der voranstehenden Ansprüche, **dadurch gekennzeichnet, dass** die Sende- und Empfangseinheiten (101, 102) derart ausgestaltet sind, dass sie untereinander Nutzdatenpakete, insbesondere zur Übermittlung von Prozessdaten und/oder Steuerdaten zur Steuerung und zum Betrieb der Fördereinrichtung (10), übertragen.

9. Fördereinrichtung (10) nach einem der voranstehenden Ansprüche, **dadurch gekennzeichnet, dass** die Steuereinheit (130) zumindest einer der zwei Sende- und Empfangseinheiten (101, 102), vorzugsweise die Steuereinheit (130) beider Sende- und Empfangseinheiten (101, 102), derart ausgestaltet ist, dass sie zusätzlich zu dem Abstandsänderungswert einen den Abstand zwischen den Sende- und Empfangseinheiten (101, 102) angebenden, absoluten Abstandsmesswert bestimmt.

10. Fördereinrichtung (10) nach Anspruch 9, **dadurch gekennzeichnet, dass** die Steuereinheit (130) zumindest einer der zwei Sende- und Empfangseinheiten (101, 102), vorzugsweise die Steuereinheit (130) beider Sende- und Empfangseinheiten (101, 102), derart ausgestaltet ist, dass sie den Abstandsänderungswert und den absoluten Abstandsmesswert addiert und den Summenwert als tatsächlichen Abstandsmesswert weiterverwendet.

11. Fördereinrichtung (10) nach einem der Ansprüche 9 oder 10, **dadurch gekennzeichnet, dass** die Steuereinheit (130) zumindest einer der zwei Sende- und Empfangseinheiten (101, 102), vorzugsweise die Steuereinheit (130) beider Sende- und Empfangseinheiten (101, 102), derart ausgestaltet ist, dass sie den Abstandsänderungswert und einen absoluten Abstandsmesswert addiert und den Summenwert als aktualisierten Abstandsmesswert weiterverwendet sowie den aktualisierten Abstandsmesswert mit einer Prüfsumme versehen an die andere Sende- und Empfangseinheit (101, 102) übermittelt.

12. Fördereinrichtung (10) nach einem der Ansprüche 9 bis 10, **dadurch gekennzeichnet, dass** die Steuereinheit (130) zumindest einer der zwei Sende- und Empfangseinheiten (101, 102), vorzugsweise die Steuereinheit (130) beider Sende- und Empfangseinheiten (101, 102), derart ausgestaltet ist, dass sie den Abstand, insbesondere den erwähnten absoluten Abstandsmesswert, ermittelt gemäß:

$$S = v \cdot \frac{dT - dt}{2}$$

- wobei dT eine selbst erfasste Gesamtzeitspanne bezeichnet,
- wobei dt eine von der anderen Sende- und Empfangseinheit (101, 102) als Information empfangene Zeitspanne bezeichnet,
- wobei v die Ausbreitungsgeschwindigkeit der optischen Strahlung bezeichnet und
- wobei S den Abstand bzw. den absoluten Abstandsmesswert bezeichnet.

**13.** Fördereinrichtung (10) nach einem der voranstehenden Ansprüche,
**dadurch gekennzeichnet, dass**
die Steuereinheit (130) zumindest einer der zwei Sende- und Empfangseinheiten (101, 102), vorzugsweise die Steuereinheit (130) beider Sende- und Empfangseinheiten (101, 102), derart ausgestaltet ist, dass sie für jedes Datenpaket oder zumindest für eine vorgegebene Art an Datenpaketen vor dem Versenden jeweils eine Pufferzeitspanne ermittelt, für die das jeweilige Datenpaket vor dem Versenden zu der jeweils anderen Sende- und Empfangseinheit (101, 102) zwischengespeichert werden soll, das Datenpaket für die jeweilige Pufferzeitspanne in einem Datenpuffer speichert und erst anschließend zu der jeweils anderen Sende- und Empfangseinheit (101, 102) übermittelt, wobei die Pufferzeitspannen jeweils derart ermittelt werden, dass diese einer vorgegebenen maximalen Pufferzeitspanne abzüglich einer von der Steuereinheit (130) prognostizierten Laufzeit des jeweiligen Datenpakets zu der jeweils anderen Sende- und Empfangseinheit (101, 102) entsprechen.

**14.** Verfahren zum Betreiben einer Fördereinrichtung (10), wobei

- zwei Sende- und Empfangseinheiten (101, 102), von denen eine an einer verfahrbaren Transporteinrichtung (20) der Fördereinrichtung (10) und die andere an einem anderen Abschnitt (11) der Fördereinrichtung (10) befestigt ist, in einer optischen Freistrahlverbindung (40) stehen und Datenpakete übermitteln,

**dadurch gekennzeichnet, dass**

- die zwei Sende- und Empfangseinheiten (101, 102) jeweils ein Empfangssignal, insbesondere dessen Datenpakete oder zumindest eine vorgegebene Art von Datenpaketen, auf das Vorhandensein einer Gerätekennung, die die jeweils andere Sende- und Empfangseinheit (101, 102) identifiziert, überprüfen und das Empfangssignal, insbesondere das jeweilige Datenpaket, komplett oder in Teilen verwerfen, wenn in dem Empfangssignal bzw. dem jeweiligen Datenpaket keine die jeweils andere Sende- und Empfangseinheit (101, 102) identifizierende Gerätekennung enthalten ist, und
- die Steuereinheit (130) zumindest einer der zwei Sende- und Empfangseinheiten (101, 102), vorzugsweise die Steuereinheit (130) beider Sende- und Empfangseinheiten (101, 102), aus über die optische Freistrahlverbindung (40) empfangenen optischen Empfangssignalen ein Empfangstaktsignal erzeugt, die Zeitpunkte von ansteigenden und/oder abfallenden Flankenwechseln des Empfangstaktsignals über eine Vielzahl an Taktperioden erfasst, unter Heranziehung der Zeitpunkte in der Vergangenheit den Zeitpunkt des jeweils nächsten Flankenwechsels unter Bildung eines geschätzten Flankenwechselzeitpunkts schätzt und anhand des geschätzten Flankenwechselzeitpunkts und des tatsächlichen Flankenwechselzeitpunkts einen eine Abstandsänderung zwischen den Sende- und Empfangseinheiten (101, 102) angebenden Abstandsänderungswert bildet.

**Claims**

**1.** Conveying device (10) having at least one movable transport device (20),
wherein

- the conveying device (10) has an optical free-beam communication system (30) having two transmission and reception units (101, 102), each of which comprises a transmitter (110), a receiver (120) and a control unit (130) and one of which is mounted on the movable transport device (20) and the other of which is mounted on another section (11) of the conveying device (10), and
- the two transmission and reception units (101, 102) are in an optical free-beam connection (40) and allow transmission of data packets,

**characterized in that**

- the control unit (130) of at least one of the two transmission and reception units (101, 102), preferably the control unit (130) of both transmission and reception units (101, 102), is configured such that it checks a received signal, in particular the data packets thereof or at least a prescribed type of data packets, for the presence of a device identifier that identifies the respective other transmission and reception unit (101, 102), and rejects the received signal, in particular the respective data packet, completely or in part if the received signal or the respective data packet contains no device identifier identifying the respective other transmission and reception unit (101, 102), and
- the control unit (130) of at least one of the two transmission and reception units (101, 102), preferably the control unit (130) of both transmission and reception units (101, 102), is configured such that it generates a received clock signal from optical received signals received via the optical free-beam connection (40), captures the times of rising and/or falling edge changes in the received clock signal over a multiplicity of clock periods, uses the times in the past to estimate the time of the respective next edge change to form an estimated edge change time and uses the estimated edge change time and the actual edge change time to form a distance change value indicating a change of distance between the transmission and reception units (101, 102).

2. Conveying device (10) according to Claim 1, **characterized in that**

- the control unit (130) of at least one of the two transmission and reception units (101, 102), preferably the control unit (130) of both transmission and reception units (101, 102), is configured such that it ascertains the physical distance between the two transmission and reception units (101, 102) by using a piece of information that allows or assists the distance ascertainment, or multiple such pieces of information, which are received from the respective other transmission and reception unit (101, 102), and
- the control unit (130) is moreover configured such that it checks a received data packet that has a piece of information allowing or assisting the distance ascertainment for the presence of the device identifier that identifies the respective other transmission and reception unit (101, 102), and uses the information contained in the respective data packet to determine the physical distance exclusively if the respective data packet contains the device identifier, and otherwise ignores the received signal during the distance determination.

3. Conveying device (10) according to either of the preceding claims, **characterized in that**

- the control unit (130) of at least one of the two transmission and reception units (101, 102), preferably the control unit (130) of both transmission and reception units (101, 102), has a distance determination module (230) and a verification module (260),
- wherein the distance determination module (230) is configured such that it ascertains the physical distance between the two transmission and reception units (101, 102) by using a piece of information or multiple pieces of information that are received from the respective other transmission and reception unit (101, 102), and
- wherein the verification module (260) is configured such that it checks a received data packet that has a piece of information allowing or assisting the distance determination for the presence of the device identifier that identifies the respective other transmission and reception unit (101, 102), and releases the information that the data packet contains regarding the determination of the physical distance for evaluation by the distance determination module (230) exclusively if the data packet contains the device identifier identifying the respective other transmission and reception unit (101, 102), and otherwise blocks the use of the information.

4. Conveying device (10) according to Claim 3, **characterized in that**
the control unit (130) of at least one of the two transmission and reception units (101, 102), preferably the control unit (130) of both transmission and reception units (101, 102), has a verification module (260) having a checksum control module (261) that is configured such that it performs a prescribed checksum control for a data packet to be checked and releases a piece of information that the data packet contains regarding the determination of the physical distance for evaluation by the distance determination module (230) exclusively if the checksum control confirms the correctness of the received device identifier or errors that the device identifier contains can be corrected on the basis of the respective checksum, and otherwise blocks the use of the information.

5. Conveying device (10) according to either of Claims 3 and 4, **characterized in that**
the control unit (130) of at least one of the two transmission and reception units (101, 102), preferably the control unit (130) of both transmission and reception units (101, 102), has a verification module (260) having a checksum control module (261) that is configured such that it performs a prescribed checksum control for a data packet to be checked and releases a piece of information that the data packet contains regarding the determination of the physical distance for evaluation by the distance determination module (230) exclusively if the checksum control confirms the correctness of the information regarding the determination of the physical distance or detected errors can be corrected, and otherwise blocks the use of the information.

6. Conveying device (10) according to either of Claims 4 and 5, **characterized in that**
the control unit (130) of at least one of the two transmission and reception units (101, 102), preferably the control unit (130) of both transmission and reception units (101, 102), in particular the checksum control module (261) thereof, is configured such that it performs a cyclic redundancy check for data packets to be checked.

7. Conveying device (10) according to one of Claims 3 to 6,
   **characterized in that**
   the control units (130), in particular the distance determination modules thereof, are configured such that they interchange and compare among one another ascertained distance values that indicate the physical distance between the two transmission and reception units (101, 102), and, if the disparity between their own distance values, ascertained themselves, and the distance values received from the respective other transmission and reception unit (101, 102) reaches or exceeds a prescribed maximum difference, generate an error signal.

8. Conveying device (10) according to one of the preceding claims,
   **characterized in that**
   the transmission and reception units (101, 102) are configured such that they transmit among one another useful data packets, in particular for transmitting process data and/or control data for controlling and operating the conveying device (10).

9. Conveying device (10) according to one of the preceding claims,
   **characterized in that**
   the control unit (130) of at least one of the two transmission and reception units (101, 102), preferably the control unit (130) of both transmission and reception units (101, 102), is configured such that it determines, in addition to the distance change value, an absolute distance measured value indicating the distance between the transmission and reception units (101, 102).

10. Conveying device (10) according to Claim 9,
    **characterized in that**
    the control unit (130) of at least one of the two transmission and reception units (101, 102), preferably the control unit (130) of both transmission and reception units (101, 102), is configured such that it adds the distance change value and the absolute distance measured value and continues using the summed value as the actual distance measured value.

11. Conveying device (10) according to either of Claims 9 and 10,
    **characterized in that**
    the control unit (130) of at least one of the two transmission and reception units (101, 102), preferably the control unit (130) of both transmission and reception units (101, 102), is configured such that it adds the distance change value and an absolute distance measured value and continues using the summed value as the updated distance measured value and transmits the updated distance measured value provided with a checksum to the other transmission and reception unit (101, 102).

12. Conveying device (10) according to either of Claims 9 and 10,
    **characterized in that**
    the control unit (130) of at least one of the two transmission and reception units (101, 102), preferably the control unit (130) of both transmission and reception units (101, 102), is configured such that it ascertains the distance, in particular the aforementioned absolute distance measured value, according to:

$$S = v \cdot \frac{dT - dt}{2}$$

   - where dT denotes a self-captured total period,
   - where dt denotes a period received from the other transmission and reception unit (101, 102) as information,
   - where v denotes the propagation speed of the optical radiation, and
   - where S denotes the distance or the absolute distance measured value.

13. Conveying device (10) according to one of the preceding claims,
    **characterized in that**
    the control unit (130) of at least one of the two transmission and reception units (101, 102), preferably the control unit (130) of both transmission and reception units (101, 102), is configured such that it ascertains, for each data packet or at least for a prescribed type of data packets, before sending, a respective buffer period for which the respective data packet needs to be buffer-stored before sending to the respective other transmission and reception unit (101, 102), stores the data packet in a data buffer for the respective buffer period and only subsequently transmits it to the respective other transmission and reception unit (101, 102), the buffer periods each being ascertained such that they are consistent with a prescribed maximum buffer period minus a delay forecast by the control unit (130) for the respective data packet to the respective other transmission and reception unit (101, 102).

14. Method for operating a conveying device (10), wherein

   - two transmission and reception units (101, 102), one of which is mounted on a movable transport device (20) of the conveying device (10) and the other of which is mounted on another section (11) of the device (10), are in an optical free-beam connection (40) and transmit data packets,

**characterized in that**

- the two transmission and reception units (101, 102) each check a received signal, in particular the data packets thereof or at least a prescribed type of data packets, for the presence of a device identifier that identifies the respective other transmission and reception unit (101, 102), and reject the received signal, in particular the respective data packet, completely or in part if the received signal or the respective data packet contains no device identifier identifying the respective other transmission and reception unit (101, 102), and

- the control unit (130) of at least one of the two transmission and reception units (101, 102), preferably the control unit (130) of both transmission and reception units (101, 102), generates a received clock signal from optical received signals received via the optical free-beam connection (40), captures the times of rising and/or falling edge changes in the received clock signal over a multiplicity of clock periods, uses the times in the past to estimate the time of the respective next edge change to form an estimated edge change time and uses the estimated edge change time and the actual edge change time to form a distance change value indicating the change of distance between the transmission and reception units (101, 102).

**Revendications**

1. Système de convoyage (10), avec au moins un système de transport (20) déplaçable,

- le système de convoyage (10) présentant un système de communication à faisceau libre (30) optique avec deux unités d'émission et de réception (101, 102) qui comprennent respectivement un émetteur (110), un récepteur (120) et une unité de commande (130) et dont l'une est fixée sur le système de transport (20) déplaçable et l'autre sur un autre tronçon (11) du système de convoyage (10), et

- les deux unités d'émission et de réception (101, 102) étant dans une relation de faisceau libre (40) optique et permettant une transmission de paquets de données,

**caractérisé en ce que**

- l'unité de commande (130) d'au moins une des deux unités d'émission et de réception (101, 102), de préférence l'unité de commande (130) des deux unités d'émission et de réception (101, 102), est constituée de telle sorte qu'elle examine un signal de réception, en particulier ses paquets de données ou au moins un type spécifié au préalable de paquets de données, à la recherche de la présence d'un identifiant d'appareil qui identifie respectivement l'autre unité d'émission et de réception (101, 102), et rejette le signal de réception, en particulier le paquet de données respectif, complètement ou partiellement si le signal de réception ou respectivement le paquet de données respectif ne contient pas l'identifiant d'appareil identifiant respectivement l'autre unité d'émission et de réception (101, 102), et

- l'unité de commande (130) d'au moins une des deux unités d'émission et de réception (101, 102), de préférence l'unité de commande (130) des deux unités d'émission et de réception (101, 102), est constituée de telle sorte que, à partir de signaux de réception optiques reçus via la relation de faisceau libre (40) optique, elle produit un signal d'horloge de réception, elle détecte les moments de changements de flanc montants et/ou descendants du signal d'horloge de réception sur une multiplicité de périodes d'horloge, elle estime, en faisant appel aux moments dans le passé, le moment du changement de flanc suivant respectif en formant un moment de changement de flanc estimé et, à l'aide du moment de changement de flanc estimé et du moment de changement de flanc effectif, elle forme une valeur de variation de distance indiquant une variation de distance entre les unités d'émission et de réception (101, 102).

2. Système de convoyage (10) selon la revendication 1, **caractérisé en ce que**

- l'unité de commande (130) d'au moins une des deux unités d'émission et de réception (101, 102), de préférence l'unité de commande (130) des deux unités d'émission et de réception (101, 102), est constituée de telle sorte qu'elle détermine la distance spatiale entre les deux unités d'émission et de réception (101, 102) en faisant appel à une information permettant de déterminer la distance ou facilitant cette détermination ou à plusieurs informations de ce genre qui sont reçues en provenance de respectivement l'autre unité d'émission et de réception (101, 102), et

- l'unité de commande (130) est par ailleurs constituée de telle sorte qu'elle examine un paquet de données reçu qui présente une information permettant la détermination de distance ou facilitant celle-ci, à la recherche de la présence de l'identifiant d'appareil qui identifie respectivement l'autre unité d'émission et de réception (101, 102) et ne fait appel à l'information contenue dans le paquet de données respectif destinée à la détermination de la distance spatiale que si l'identifiant d'appareil est contenu dans le paquet de données respectif, sinon elle ignore le signal de réception lors de la détermination de distance.

3. Système de convoyage (10) selon l'une des revendications précédentes,
   **caractérisé en ce que**

   - l'unité de commande (130) d'au moins une des deux unités d'émission et de réception (101, 102), de préférence l'unité de commande (130) des deux unités d'émission et de réception (101, 102), présente un module de détermination de distance (230) et un module de vérification (260),
   - le module de détermination de distance (230) étant constitué de telle sorte qu'il détermine la distance spatiale entre les deux unités d'émission et de réception (101, 102) en faisant appel à une information ou à plusieurs informations qui sont reçues en provenance de respectivement l'autre unité d'émission et de réception (101, 102), et
   - le module de vérification (260) étant constitué de telle sorte qu'il examine un paquet de données reçu qui présente une information permettant la détermination de distance ou facilitant celle-ci à la recherche de la présence de l'identifiant d'appareil qui identifie respectivement l'autre unité d'émission et de réception (101, 102), et ne valide l'information contenue dans le paquet de données destinée à la détermination de la distance spatiale pour une analyse par le module de détermination de distance (230) que si l'identifiant d'appareil identifiant respectivement l'autre unité d'émission et de réception (101, 102) est contenu dans le paquet de données, sinon il bloque l'utilisation de l'information.

4. Système de convoyage (10) selon la revendication 3,
   **caractérisé en ce que**
   l'unité de commande (130) d'au moins une des deux unités d'émission et de réception (101, 102), de préférence l'unité de commande (130) des deux unités d'émission et de réception (101, 102), présente un module de vérification (260) avec un module de contrôle de somme de contrôle (261) qui est constitué de telle sorte que, pour un paquet de données à contrôler, il procède à un contrôle de somme de contrôle spécifié au préalable et ne valide une information contenue dans le paquet de données destinée à la détermination de la distance spatiale pour une analyse par le module de détermination de distance (230) que si le contrôle de somme de contrôle confirme l'absence d'erreur de l'identifiant d'appareil reçu ou que si des erreurs contenues dans l'identifiant d'appareil peuvent être corrigées à l'aide de la somme de contrôle respective, et sinon il bloque l'utilisation de l'information.

5. Système de convoyage (10) selon l'une des revendications 3 ou 4,
   **caractérisé en ce que**
   l'unité de commande (130) d'au moins une des deux unités d'émission et de réception (101, 102), de préférence l'unité de commande (130) des deux unités d'émission et de réception (101, 102), présente un module de vérification (260) avec un module de contrôle de somme de contrôle (261) qui est constitué de telle sorte que, pour un paquet de données à contrôler, il procède à un contrôle de somme de contrôle spécifié au préalable et ne valide une information contenue dans le paquet de données destinée à la détermination de la distance spatiale pour une analyse par le module de détermination de distance (230) que si le contrôle de somme de contrôle confirme l'absence d'erreur de l'information destinée à la détermination de la distance spatiale ou que si des erreurs constatées peuvent être corrigées, et sinon il bloque l'utilisation de l'information.

6. Système de convoyage (10) selon l'une des revendications 4 ou 5,
   **caractérisé en ce que**
   l'unité de commande (130) d'au moins une des deux unités d'émission et de réception (101, 102), de préférence l'unité de commande (130) des deux unités d'émission et de réception (101, 102), en particulier leur module de contrôle de somme de contrôle (261), est constituée de telle sorte qu'elle procède à un contrôle de redondance cyclique pour des paquets de données à contrôler.

7. Système de convoyage (10) selon l'une des revendications 3 à 6,
   **caractérisé en ce que**
   les unités de commande (130), en particulier leurs modules de détermination de distance, sont constituées de telle sorte qu'elles échangent entre elles et comparent des valeurs de distance déterminées qui indiquent la distance spatiale entre les deux unités d'émission et de réception (101, 102) et produisent un signal d'erreur dans le cas où la divergence entre les valeurs propres de distance déterminées elles-mêmes et les valeurs de distance reçues en provenance de respectivement l'autre unité d'émission et de réception (101, 102) atteint ou dépasse une différence maximale spécifiée au préalable.

8. Système de convoyage (10) selon l'une des revendications précédentes,

**caractérisé en ce que**

les unités d'émission et de réception (101, 102) sont constituées de telle sorte qu'elles se communiquent entre elles des paquets de données utiles, en particulier destinés à la transmission de données de processus et/ou de données de commande destinées à la commande et au fonctionnement du système de convoyage (10) .

9. Système de convoyage (10) selon l'une des revendications précédentes,
**caractérisé en ce que**
l'unité de commande (130) d'au moins une des deux unités d'émission et de réception (101, 102), de préférence l'unité de commande (130) des deux unités d'émission et de réception (101, 102), est constituée de telle sorte que, en plus de la valeur de variation de distance, elle détermine une valeur de mesure de distance absolue indiquant la distance entre les unités d'émission et de réception (101, 102).

10. Système de convoyage (10) selon la revendication 9,
**caractérisé en ce que**
l'unité de commande (130) d'au moins une des deux unités d'émission et de réception (101, 102), de préférence l'unité de commande (130) des deux unités d'émission et de réception (101, 102), est constituée de telle sorte qu'elle additionne la valeur de variation de distance et la valeur de mesure de distance absolue, et réutilise la somme en tant que valeur de mesure de distance effective.

11. Système de convoyage (10) selon l'une des revendications 9 ou 10,
**caractérisé en ce que**
l'unité de commande (130) d'au moins une des deux unités d'émission et de réception (101, 102), de préférence l'unité de commande (130) des deux unités d'émission et de réception (101, 102), est constituée de telle sorte qu'elle additionne la valeur de variation de distance et une valeur de mesure de distance absolue, et réutilise la somme en tant que valeur de mesure de distance actualisée de même qu'elle transmet à l'autre unité d'émission et de réception (101, 102) la valeur de mesure de distance actualisée munie d'une somme de contrôle.

12. Système de convoyage (10) selon l'une des revendications 9 et 10,
**caractérisé en ce que**
l'unité de commande (130) d'au moins une des deux unités d'émission et de réception (101, 102), de préférence l'unité de commande (130) des deux unités d'émission et de réception (101, 102), est constituée de telle sorte qu'elle détermine la distance, en particulier la valeur de mesure de distance absolue mentionnée, selon :

$$S = v \cdot \frac{dT - dt}{2}$$

- dT désignant un laps de temps total détecté en propre,
- dt désignant un laps de temps reçu en tant qu'information en provenance de l'autre unité d'émission et de réception (101, 102),
- v désignant la vitesse de propagation du rayonnement optique, et
- S désignant la distance ou respectivement la valeur de mesure de distance absolue.

13. Système de convoyage (10) selon l'une des revendications précédentes,
**caractérisé en ce que**
l'unité de commande (130) d'au moins une des deux unités d'émission et de réception (101, 102), de préférence l'unité de commande (130) des deux unités d'émission et de réception (101, 102), est constituée de telle sorte que, pour chaque paquet de données ou au moins pour un type spécifié au préalable de paquet de données, elle détermine avant l'envoi respectivement un laps de temps tampon pendant lequel le paquet de données respectif doit être mis en mémoire tampon avant l'envoi vers respectivement l'autre unité d'émission et de réception (101, 102), elle met en mémoire le paquet de données dans une mémoire tampon pendant le laps de temps tampon respectif, et elle ne le transmet qu'ensuite à, respectivement, l'autre unité d'émission et de réception (101, 102), les laps de temps tampon étant déterminés respectivement de telle sorte que ceux-ci correspondent à un laps de temps tampon maximal spécifié au préalable moins un temps de parcours, pronostiqué par l'unité de commande (130), du paquet de données respectif vers respectivement l'autre unité d'émission et de réception (101, 102).

14. Procédé de fonctionnement d'un système de convoyage (10),

- deux unités d'émission et de réception (101, 102), dont l'une est fixée sur un système de transport (20) déplaçable du système de convoyage (10) et l'autre est fixée sur un autre tronçon (11) du système de convoyage (10), sont dans une relation de faisceau libre (40) optique et transmettent des paquets de données,

**caractérisé en ce que**

- les deux unités d'émission et de réception (101, 102) examinent respectivement un signal de réception, en particulier ses paquets de données ou au moins un type spécifié au préalable de paquets de données, à la recherche de la présence d'un identifiant d'appareil qui identifie respectivement l'autre unité d'émission et de réception (101, 102), et rejettent le signal de réception, en particulier le paquet de données respectif, complètement ou partiellement si le signal de réception ou respectivement le paquet de données respectif ne contient pas l'identifiant d'appareil identifiant respectivement l'autre unité d'émission et de réception (101, 102) respectif, et

- l'unité de commande (130) d'au moins une des deux unités d'émission et de réception (101, 102), de préférence l'unité de commande (130) des deux unités d'émission et de réception (101, 102) produit un signal d'horloge de réception à partir de signaux de réception optiques reçus via la relation de faisceau libre (40) optique, détecte les moments de changements de flanc montants et/ou descendants du signal d'horloge de réception sur une multiplicité de périodes d'horloge, estime, en faisant appel aux moments dans le passé, le moment du changement de flanc suivant respectif avec formation d'un moment de changement de flanc estimé et, à l'aide du moment de changement de flanc estimé et du moment de changement de flanc effectif, forme une valeur de variation de distance indiquant une variation de distance entre les unités d'émission et de réception (101, 102).

Fig. 1

EP 3 166 235 B1

Fig. 2

EP 3 166 235 B1

Pin(t)

NDR

NDP

t

Fig.3

Pin(t)

NDR

IP

NDR

I

t

Fig.4

Pin(t)

NDR

IP

NDP

t

Fig.5

Fig. 6

EP 3 166 235 B1

Fig.7

Ta(t)

t1  t2  t3  t4  t5'

T  T  T  T

t

Fig.8

Ta(t)

t1  t2  t3  t4  t5

T-dT

dT

t

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4435056 B4

- DE 102013001358 A1

**In der Beschreibung aufgeführte Nicht-Patentliteratur**

- ITU-T Gigabit-capable Passive Optical Networks (G-PON): Transmission convergence layer specification. *G 984.3 Telecom Standardization,* 20. Juli 2004